# EUROPEAN PATENT SPECIFICATION

(11) **EP 2 221 996 B1**
(45) Date of publication and mention of the grant of the patent: **09.01.2013**
(21) Application number: 09153207.7
(22) Date of filing: 19.02.2009
(51) Int. Cl.: H04B 10/07

(54) **Method for remote-controlled interrupting of an optical date line and line unit therefor**
Verfahren zur ferngesteuerten Unterbrechung einer optischen Datenleitung und Leitungseinheit dafür
Procédé d'interruption commandée à distance d'une ligne de données optique et son unité de ligne

(43) Date of publication of application: 25.08.2010
(73) Proprietor: Alcatel Lucent, 75007 Paris (FR)
(72) Inventor: Pfeiffer, Thomas, 70569, Stuttgart (DE)
(74) Representative: Mildner, Volker

(56) References cited:
- EP-A- 0 499 519
- JP-A- 2001 308 795

## Description

The invention relates to a method for remote-controlled interrupting of an optical data line according to the preamble of claim 1, and to a line unit according to the preamble of claim 2.

In all point-to-multi-point optical communication's systems, normally with a central station and a multiple of remote stations, devices at the multi-point side have to observe strict specifications, especially with respect to transmit times. If they do not observe such specifications, the whole communication's system will be severely affected.

Devices foreseen for acting as such remote stations should be able to detect such malfunction and to switch off. But in case the device cannot detect such malfunction or a user injects light on purpose in a malicious way, the operator of such communication's system needs to have some means to disconnect that respective device from the network.

For the purpose of monitoring the network part of such telecommunication's systems it is known to introduce so-called demarcation points as fiber network interfaces between the operator's network part and the user's network part or device. Patent application EP 1 986 350 A1 (internal docket 801286) shows an example of such "demarcation point". For monitoring the line an optical MEMS switch (MEMS = Micro Electromechanical System) can be remotely activated to interrupt the line and terminate it with a mirror. This feature of course could be used also for cutting off the malfunctioning device.

An "OPTICAL FUSE SYSTEM" presented in JP 2001 308795 A on behalf of OKI ELECTRIC IND CO LTD on 2 November 2001 using an optical shutter has the same effect and the same drawback.

The document 'Shing-Wa Wong; Wei-Tao Shaw; Das, S.; Kazovsky, L.G.; , 'OPN01-6: Enabling Security Countermeasure and Service Restoration in Passive Optical Networks,' Global Telecommunications Conference, 2006. GLOBECOM '06. IEEE , vol., no., pp.1-5, Nov. 27 2006-Dec. 1 2006' discloses a method for interrupting an optical transmission line, by blocking an optical fuse using an optical control signal.

The major drawback of such solution is the fact, that they involve moving elements. Since this function is rarely activated, if at all, the mechanically moving parts may be stuck in their position, just when they should be moved.

It is the object of the invention to overcome this problem.

This problem according to the invention is solved by a method according to the teaching of claim 1, and by a line unit according to the teaching of claim 2.

It is easier and more reliable to irreversibly destroy whatever element in a remote device by means of electrically heating or electrically inducing a chemical process than to mechanically move it. In order to avoid a longer lasting blocking of the whole system an operator normally will accept that as a consequence the field service has to be engaged.

Further embodiments of the invention are to be found in the subclaims and in the accompanying description.

In the following the invention will be described with the aid of the accompanying drawing:
- Figure 1: shows the use of a mirror with a reflecting element on a resistive layer in a line unit according to an exemplary embodiment of the invention.
- Figure 2: shows the situation of figure 1 after having applied the method according to the invention.

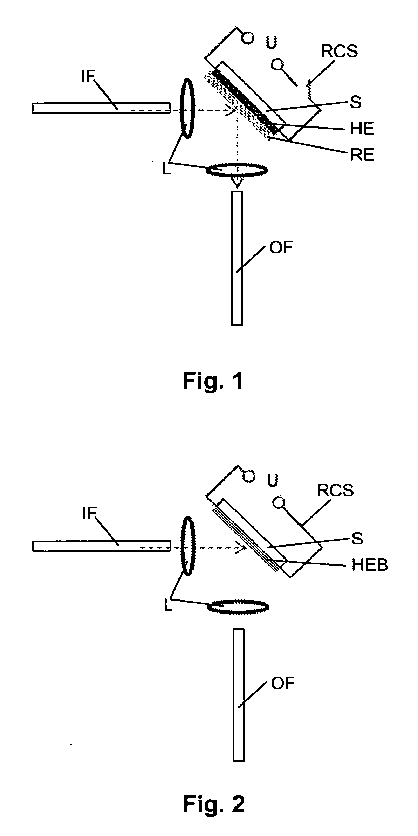

Figure 1 shows an incoming fiber IF, an outgoing fiber OF, two lenses L and a reflecting element RE. The reflecting element RE is applied on a resistive element acting as a heating element HE applied on a substrate S. Incoming fiber IF, outgoing fiber OF, lenses L and reflecting element RE are adjusted such that light coming from the incoming fiber IF is output via the outgoing fiber OF, and, of course, vice-versa. The heating element HE is shown as part of an electric circuit further including a power source U and a remotely controllable switch RCS.

The arrangement shown in figure 1 is suited for establishing an optical two-way data connection between the incoming fiber IF and the outgoing fiber OF. The two lenses L together with the reflecting element RE according to the teaching of claim such that the both fiber ends are mapped onto one another.

The power source U may be for example a remote power supply from the central station, a local power supply from the local subscriber's premises or a battery locally charged under normal operation. In case it is a mere power supply from the local subscriber's premises, abuse of the kind as mentioned above can not be hindered.

The remotely controllable switch RCS is to be controlled from the central station, for example using control data sent to a "demarcation point" as mentioned above, in which such arrangement is contained. In case the power source U is really a remote power supply from the central station, no such remotely controllable switch RCS is necessary within the remote line unit.

Figure 2 shows the situation after the arrangement shown in figure 1 has been used to interrupt the optical two-way data connection. In applying power to the heating element HE of figure 1 this element turned to a burned heating element HEB. Such burning has destroyed or removed the reflecting element RE of figure 1 depending of the kind of such reflecting element. A vapor deposited reflecting layer is likely to be destroyed; a reflecting foil glued on the heating element HE is likely to be removed.

The remotely controllable switch RCS is now shown in figure 2 in a closed state. When this switch RCS really is part of the remote line unit, then it is likely that it is no longer usable after having been activated. But the whole arrangement anyway is no longer workable and has to be replaced.

It is clear that here only the principle is shown. Instead of using a mirror one could also for example foresee to destroy the optical properties of an optical fiber. Optical fibers are complicated components with very specific optical properties. Such properties are very sensitive to improper surroundings like heat or aggressive air and thus their properties can easily be destroyed by electrically applied heat or by electrically activated chemicals.

As it is very easy to destroy something, there are lots of possibilities to enable the invention. One needs only to take care that nothing else but the means for the optical data connection is destroyed (and of course that initiating the interrupting really can be done only on purpose).

## Claims

1. Line unit for establishing an optical data connection (IF, OF) between a device equipped with an optical data transmitter or data receiver and an optical data line, including means for interrupting the optical data connection by remote control (U, RCS), wherein the means (HE, RE) are built such that the data connection (IF, OF) is irreversibly interrupted,
wherein said means are remotely controllable in dependence on control data sent to the line unit, **characterized in that** said means apply electrical heat or electrically activated chemicals to the optical data connection.

2. Line unit according to claim 1, **characterized in, that** an optical reflecting layer (RE) is provided with an electrical heating (HE), the activation (U, RCS) of which destroys or removes the optical reflecting layer (RE).

3. Line unit according to claim 1, **characterized in, that** an optical fiber is provided with an electrical heating, the activation of which destroys properties of the optical fiber.

## Patentansprüche

1. Leitungseinheit für den Aufbau einer optischen Datenverbindung (IF, OF) wischen einer mit einem optischen Datensender oder Datenempfänger ausgestatteten Vorrichtung und einer optischen Datenleitung, umfassend Mittel zum Unterbrochen der optischen Datenverbindung anhand einer Fernsteuerung (U, RCS), wobei die Mittel (HE, RE) derart aufgebaut sind, dass die Unterbrechung der Datenverbindung (IF, OF) irreversibel ist,
wobei die besagten Mittel in Abhängigkeit von an die Leitungseinheit gesendeten Steuerdaten fernsteuerbar sind, **dadurch gekennzeichnet, dass** die besagten Mittel die optische Datenverbindung elektrisch erhitzen oder mit elektrisch aktivierten Chemikalien versorgen.

2. Leitungseinheit nach Anspruch 1, **dadurch gekennzeichnet, dass** eine optische Reflexionsschicht (RE) mit einer elektrischen Heizvorrichtung (HE) versehen ist, deren Aktivierung (U, RCS) die optische Reflexionsschicht (RE) zerstört oder entfernt.

3. Leitungseinheit nach Anspruch 1, **dadurch gekennzeichnet, dass** eine optische Faser mit einer elektrischen Heizvorrichtung versehen ist, deren Aktivierung die Eigenschaften der optischen Faser zerstört.

## Revendications

1. Unité de ligne pour établir une connexion de données optiques (IF, OF) entre un appareil équipé d'un émetteur de données optiques ou un récepteur de données et d'une ligne de données optiques, comprenant des moyens pour interrompre la connexion de données optiques à l'aide d'une commande à distance (U, RCS), dans laquelle les moyens (HE, RE) sont conçus de telle sorte que la connexion de données (IF, OF) soit interrompue de manière irréversible,
dans laquelle lesdits moyens sont contrôlables à distance en fonction de données de commande envoyées à l'unité de ligne, **caractérisée en ce que** lesdits moyens appliquent une chaleur électrique ou des produits chimiques électriquement activés à la connexion de données optiques.

2. Unité de ligne selon la revendication 1, **caractérisée en ce qu'**une couche réfléchissante optique (RE) est dotée d'un chauffage électrique (HE), dont l'activation (U, RCS) détruit ou élimine la couche réfléchissante optique (RE).

3. Unité de ligne selon la revendication 1, **caractérisée en ce qu'**une fibre optique est dotée d'un chauffage électrique, dont l'activation détruit les propriétés de la fibre optique.
